# DEMANDE DE BREVET EUROPEEN

(11) **EP 4 559 651 A1**
(43) Date de publication de la demande: **28.05.2025**
(21) Numéro de dépôt: 24213511.9
(22) Date de dépôt: 18.11.2024
(51) Int. Cl.: B29B 13/06, B29B 13/08, B29C 48/08, B29C 48/285, B29C 48/395, B29C 48/365, B29C 48/92, B29C 48/00

(54) **PROCÉDÉ DE FABRICATION D'UN FILM DE POLYETHYLENE TEREPHTALATE**

(30) Priorité: 21.11.2023 BE 202305945
(71) Demandeur: Sabert Corporation Europe, 1400 Nivelles (BE)
(72) Inventeur: SORET, Jean-Luc, 1340 Ottignies (BE)
(74) Mandataire: Calysta NV

(57) **Abrégé**

Procédé de fabrication continu d'un film de polyéthylène téréphtalate (PET) comprenant un pré-séchage et cristallisation de flocons de PET dans un sécheur à rayonnement infrarouge pour donner des cristaux de PET, un séchage et décontamination des cristaux de PET dans un réacteur sous vide à une température d'au moins 180°C pour donner des cristaux de PET décontaminés, une extrusion des cristaux de PET décontaminés dans une extrudeuse, pour former un extrudat, un passage de l'extrudat au travers d'une pompe à masse fondue et d'une tête d'extrusion à filière plate, et un calandrage, permettant d'obtenir un film de PET.

## Description

### Domaine technique

La présente invention se situe dans le domaine de la plasturgie et des emballages alimentaires.

Plus particulièrement, la présente invention vise un procédé de fabrication continu d'un film de polyéthylène téréphtalate, PET, notamment destiné à former un emballage alimentaire, par exemple par thermoformage.

### Art antérieur

Le polyéthylène téréphtalate (PET), aussi connu sous le nom de poly(téréphtalate d'éthylène), est un polymère de type polyester saturé thermoplastique.

Par extrusion et étirage ou calandrage, le PET forme un film d'une très grande solidité en tension, très stable et étant un très bon isolant électrique. Les propriétés physico-chimiques du PET permettent un grand nombre d'usages comme, par exemple, sous forme de fil comme des fibres textiles, sous forme de film ou sous forme d'objets à 3 dimensions comme des emballages notamment alimentaires, des bouteilles, etc. En particulier, les emballages alimentaires en PET sont avantageux dans la mesure où ils sont solides, légers et résistants. Il existe ainsi de nombreux types d'emballages en PET sur le marché alimentaire, tels que des récipients de différentes formes et capacités, des bouteilles, des pots (par exemple, pour les yaourts), des barquettes, des blisters, etc. mais aussi pour le stockage/transport d'aliments tels que des plateaux, des verres, des couverts, etc.

De manière générale, les emballages alimentaires sont fabriqués communément par thermoformage, procédé dans lequel la matière plastique (sous forme d'un film/d'une feuille le plus souvent) est ramollie par chauffage avant d'être mise en forme par son application sur un moule. Son refroidissement ultérieur permet un démoulage.

Le thermoformage nécessite dès lors au préalable la fabrication d'un film ou feuille de thermoplastique.

L'extrusion est une technique de fabrication/transformation continue, rapide et peu coûteuse d'un thermoplastique. Elle consiste à transporter, fondre, malaxer, cisailler, plastifier, comprimer la matière thermoplastique dans une extrudeuse qui pousse la matière plastifiée fondue et sous pression vers une tête d'extrusion munie d'un orifice de petite dimension appelé « filière » qui met en forme la matière. Celle-ci est ensuite refroidie et figée dans sa forme définitive.

L'extrusion-calandrage est une opération qui consiste à faire passer un matériau thermoplastique dans une extrudeuse munie d'une filière plate et puis entre deux cylindres rapprochés et contrarotatifs (éventuellement refroidis) de manière à produire un film ou une feuille de faible épaisseur.

Le PET est un plastique pétro-sourcé. Pour des raisons écologiques mais aussi économique il est donc important de pouvoir disposer d'un procédé de fabrication d'un film de PET pouvant utiliser du PET recyclé, en particulier du PET recyclé issu de déchets de production interne. Cependant, le PET s'hydrolyse facilement à haute température le rendant inutilisable, ce qui représente une limitation importante au recyclage du PET comme matière réutilisable.

Bien que des procédés de fabrication de film de PET à partir de PET recyclé existent sur le marché, il est important de développer d'autres procédés de fabrication de film de PET à partir de PET recyclé qui soient à la fois simples à mettre en oeuvre, tout en étant bien contrôlés de manière à assurer une stabilité industrielle du procédé notamment afin de minimiser les pertes et les retards de production.

Il existe plusieurs procédés de fabrication de fil ou de film de PET à partir de PET recyclé.

Le document US2015076744 décrit un procédé de fabrication de filaments continus de PET pour tapis comprenant le passage de flocons de PET recyclé à travers un cristalliseur, le passage et la fonte du polymère à travers une extrudeuse à vis multiples, pour former un filament continu de PET. Ce document mentionne que l'extrudeuse multivis pouvant fonctionner à faible pression permet d'évacuer les contaminants et peut fonctionner sans sécher le PET au préalable. Cependant, l'inconvénient est que du PET présentant des degrés divers d'humidité en entrée d'extrudeuse peut générer des hétérogénéités dans la qualité du PET fondu réduisant l'efficacité du procédé, ce qui ne permet pas de fournir du PET de haute qualité de manière stable.

Le document EP2101974B1 décrit un procédé pour le prétraitement et le traitement d'une matière plastique de polyoléfine à recycler. Le procédé selon ce document comprend une étape de chauffage, cristallisation, séchage et/ou nettoyage de la matière plastique dans un réacteur sous mélange constant à une température inférieure au point de fusion de la matière plastique, préférentiellement supérieure à la température de transition vitreuse. Selon ce document, l'étape de chauffage dans le réacteur sous mélange est réalisée grâce à l'énergie mécanique apportée à la matière plastique par le mélange. Préférentiellement, selon ce document la matière plastique est chauffée, séchée, cristallisée et nettoyée en une seule opération, notamment dans un seul réacteur. Cependant, en pratique, le procédé selon ce document est très sensible à l'augmentation de température dans le réacteur et est peu stable car il présente un risque accru de passer le point de fusion provoquant une agglomération et un collage de la matière plastique dans le réacteur lors de l'étape de chauffage et de cristallisation, ce qui engendre des pertes de production et de temps énormes.

Bien que ces documents vantent les mérites de leur technologie, il existe toujours un besoin de disposer d'un procédé de fabrication de film de PET qui soit à la fois simple à mettre en oeuvre, flexible et entrant dans un principe d'économie circulaire en assurant une transformation importante de PET recyclé, tout en étant bien contrôlé pour permettre d'obtenir un film de PET de haute qualité de manière stable en minimisant les pertes de temps et les pertes de production.

### Objectifs de l'invention

La présente invention a pour but de pallier les inconvénients de l'état de la technique, en particulier ceux décrits ci-dessus.

En particulier, la présente invention propose de fournir un procédé de de fabrication de film de PET qui soit simple à mettre en oeuvre de manière à minimiser la main d'oeuvre et le temps nécessaire pour réaliser la fabrication de film de PET.

La présente invention propose également de fournir un procédé de fabrication de film de PET entrant dans un principe d'économie circulaire permettant de transformer une quantité importante de PET recyclé (voire jusqu'à 100%), notamment du PET recyclé issu de déchets de production interne.

Enfin, la présente invention se propose de fournir un procédé de fabrication de film de PET qui soit également bien contrôlé et stable industriellement de manière à fournir un film de PET de haute qualité de manière constante tout en réduisant les pertes de production et/ou de temps de main d'oeuvre.

### Résumé de l'invention

Pour atteindre ces objectifs, la présente invention fournit
un procédé de fabrication continu d'un film de polyéthylène téréphtalate (PET) comprenant, les étapes suivantes, d'amont en aval :
- une étape de pré-séchage et cristallisation de flocons de PET à une température d'au moins 80°C, les flocons de PET comprenant au moins 30% de PET recyclé, dans un sécheur à rayonnement infrarouge pour donner des cristaux de PET avec une teneur en eau dans une gamme allant de 300 ppm à 3000 ppm,
- une étape de séchage et décontamination des cristaux de PET dans un réacteur sous vide à une température d'au moins 180°C pour donner des cristaux de PET décontaminés,
- une étape d'extrusion des cristaux de PET décontaminés dans une extrudeuse, pour former un extrudat,
- un passage de l'extrudat au travers d'une pompe à masse fondue et puis au travers d'une tête d'extrusion à filière plate, et
- une étape de calandrage, permettant d'obtenir un film de PET.

L'invention est ainsi basée sur une approche nouvelle et inventive. En effet, les inventeurs ont constaté que la combinaison des caractéristiques de l'invention permet d'atteindre l'ensemble des objectifs. Ainsi, en particulier, la combinaison d'une étape de pré-séchage et cristallisation de flocons de PET à une température d'au moins 80°C dans un sécheur à rayonnement infrarouge suivie par une étape de séchage et décontamination des cristaux de PET dans un réacteur sous vide à une température d'au moins 180°C permet de réaliser la cristallisation, ainsi qu'un passage par la température de transition vitreuse, et un pré-séchage des flocons de PET dans le sécheur et non dans le réacteur sous vide.

En effet, le passage par la température de transition vitreuse, liée à la cristallisation du PET, rend le PET plus collant, ce qui entraîne une augmentation du coefficient de frottement du PET et en conséquence, une montée en température rapide qui augmente fortement le risque de collage dans le réacteur. Les inventeurs ont découvert de manière surprenante que le pré-séchage et la cristallisation des flocons de PET préalable au séchage et à la décontamination dans le réacteur sous vide permet aux cristaux de PET d'arriver encore chauds dans le réacteur sous vide en ayant déjà passé la température de transition vitreuse. Ceci assure un procédé de fabrication de film de PET flexible et stable industriellement, en (i) ayant la capacité de traiter jusqu'à 100% de PET recyclé, en (ii) réduisant l'apport d'énergie nécessaire pour chauffer les cristaux de manière à assurer une décontamination, tout en ayant une montée en température dans ledit réacteur plus lente et plus facile à contrôler (moins de puissance nécessaire), et en (iii) évitant les problèmes de collage de la matière dans le réacteur (car la transition vitreuse a déjà eu lieu dans le sécheur) et les gros inconvénients qui en découlent (arrêt de production, maintenance de l'installation, etc.).

De plus, le pré-séchage et la cristallisation des flocons de PET par rayonnement infrarouge assure un pré-séchage efficace du PET car le rayonnement infrarouge possède un bon pouvoir de pénétration dans le PET. Le pré-séchage et la cristallisation des flocons de PET préalable à l'étape de séchage et décontamination dans le réacteur sous vide permet également d'uniformiser la teneur en eau des cristaux de PET en sortie du sécheur dans une gamme allant de 300 ppm à 3000 ppm, ce qui favorise l'uniformité du séchage dans le réacteur sous vide améliorant la qualité des cristaux de PET.

Finalement, la combinaison continue des différentes étapes du procédé selon la présente invention permet d'obtenir un procédé simple à mettre en oeuvre, minimisant la main d'oeuvre nécessaire à son fonctionnement, tout en assurant la fabrication d'un film de PET à partir de PET recyclé d'une qualité élevée et constante, faisant entrer pleinement le procédé selon la présente invention dans un principe d'économie circulaire.

Selon la présente invention, on entend par le terme « PET recyclé » qu'il comprend des déchets de production interne, notamment par thermoformage, et/ou des déchets de PET externe comme par exemple des déchets issus de la collecte et du tri de bouteilles en plastique, d'emballages, etc...

Selon la présente invention, les flocons de PET comprennent du PET recyclé et/ou du PET vierge.

Selon la présente invention et comme communément admis dans le domaine, on entend par le terme « décontaminés » pour qualifier les cristaux de PET dans l'invention des cristaux de PET dans lesquels des agents pathogènes et/ou des contaminants ont été éliminés de manière à obtenir un produit fini (film de PET) ayant des caractéristiques conformes aux normes réglementaires d'application dans le domaine alimentaire, comme par exemple des films de PET pour former des emballages contenant des aliments, etc...

Selon la présente invention, on entend par le terme « réacteur sous vide », un réacteur dont la pression interne est égale ou inférieure à 30 millibar, de préférence égale ou inférieure à 10 millibar.

Selon la présente invention et comme communément admis dans le domaine, on entend par le terme « extrudat », la matière fondue en sortie d'extrudeuse.

D'autres formes de réalisation du procédé de fabrication d'un film de PET selon la présente invention sont indiquées dans les revendications annexées.

### Description détaillée de l'invention

D'autres caractéristiques, détails et avantages de l'invention ressortiront de la description donnée ci-après, à titre non limitatif et en faisant référence aux figures et aux exemples.

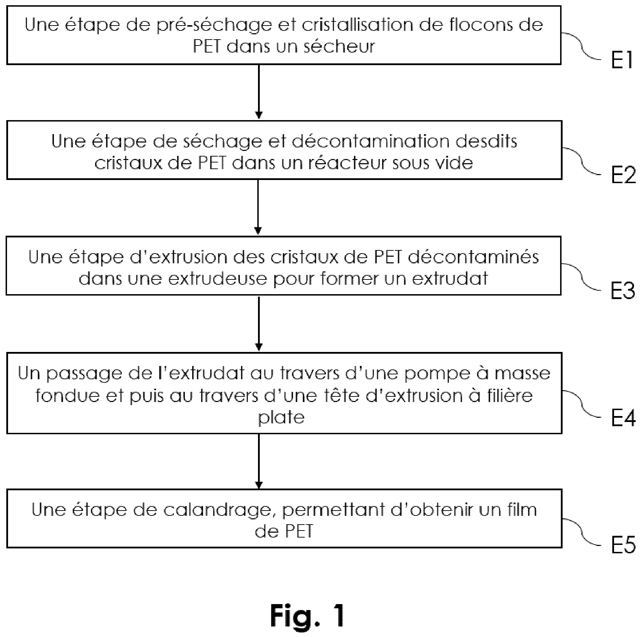

La figure 1 est un schéma des différentes étapes du procédé de fabrication d'un film de PET selon la présente invention.

Dans la présente description et les revendications, il est bien entendu que les termes « un », « une » ou « le » signifient « au moins un » et ne doivent pas être limités à « un seul », sauf indication contraire explicite. De plus, lorsqu'une plage de valeur est indiquée, les extrémités sont incluses. Finalement, toutes les valeurs intégrales et de sous-domaine dans une gamme/plage numérique sont expressément incluses comme si explicitement écrites.

Le film de PET selon l'invention peut avoir des dimensions variables, celles communément considérées dans le domaine, en particulier avec l'objectif de fabriquer des emballages alimentaires. Son épaisseur est également variable et peut aller de quelques dizaines de microns à quelques millimètres, par exemple de 30 microns à 3 mm. Dans le domaine, on distingue parfois la feuille (> 100 µm) du film (< 100 µm) en fonction de l'épaisseur mais dans le présent texte, le terme « film » sera utilisé indépendamment de l'épaisseur.

Une première étape E1 du procédé de fabrication continu d'un film de PET selon la présente invention consiste en une étape de pré-séchage et cristallisation de flocons de PET à une température d'au moins 80°C, les flocons de PET comprenant au moins 30% de PET recyclé, dans un sécheur à rayonnement infrarouge pour donner des cristaux de PET avec une teneur en eau dans une gamme allant de 300 ppm à 3000 ppm. Avantageusement, le sécheur comprend un tambour rotatif dans lequel le PET avance entre une entrée du sécheur et une sortie du sécheur. Une étape de pré-séchage et cristallisation de flocons de PET à une température d'au moins 80°C permet de passer au-dessus de la température de transition vitreuse des flocons de PET et permet également de réduire et d'uniformiser la teneur en eau des cristaux de PET en sortie du sécheur, avec une teneur en eau dans une gamme allant de 300 ppm à 3000 ppm. De manière préférée, les flocons de PET comprennent au moins 80%, 85%, 90%, 91%, 92%, 93%, 94%, 95%, 96%, 97%, 98%, 99%, voire 100% en poids de PET recyclé (par rapport au poids total des flocons de PET introduits dans le sécheur). En effet, il est avantageux que le procédé selon la présente invention permette de traiter et transformer en film de PET une quantité la plus importante possible de PET recyclé de manière à s'intégrer pleinement dans un principe d'économie circulaire. Préférentiellement, le PET recyclé comprend jusqu'à 40% en poids de PET issus de déchets de production interne par thermoformage (par rapport au poids de PET recyclé). De manière préférée également, le PET recyclé comprend au moins 10%, 15%, 20%, 25%, 30% ou même 35% en poids de PET issus de déchets de production interne par thermoformage. En effet, l'intégration de PET issus de déchets de production interne par thermoformage permet également d'intégrer le procédé selon la présente invention dans un principe d'économie circulaire avec un avantage indéniable au niveau économique et écologique. Préférentiellement, le PET recyclé comprend une quantité maximale en poids de PET issus de déchets de production interne par thermoformage de manière à maintenir les propriétés physico-chimiques, comme par exemple la viscosité, du film de PET fabriqué par le procédé selon la présente invention dans une gamme adéquate avec son utilisation ultérieure.

De préférence, les flocons de PET sont lavés en amont de l'étape E1 de l'invention. Ceci est avantageux pour éliminer des contaminants grossiers pouvant notamment s'accumuler dans le PET recyclé lors des différentes étapes amont comme, par exemple, au cours des systèmes de collecte, de tri, de broyage, etc.

De préférence, à l'étape E1 de pré-séchage et cristallisation de flocons de PET, le temps de résidence dans le sécheur est compris entre 2 minutes et 30 minutes, et la température est supérieure à 80°C, préférentiellement comprise entre 100°C et 200°C, plus préférentiellement entre 150°C et 180°C. En effet, la combinaison d'un temps de résidence et d'une température dans ces gammes de valeur pour l'étape de pré-séchage et cristallisation sont optimales pour obtenir une cristallisation des cristaux de PET ayant une teneur en eau uniforme comprise entre 300 et 3000 ppm, ce qui améliorera l'étape de séchage et décontamination subséquente.

Avantageusement, les cristaux de PET en sortie du sécheur ont une température comprise entre 60°C et 120°C et sont directement envoyés en continu, encore chauds, dans le réacteur sous vide. En effet, il est avantageux que les cristaux de PET soient envoyés encore chauds dans le réacteur sous vide de manière à minimiser l'énergie requise pour chauffer les cristaux de PET dans le réacteur sous vide, ce qui représente un gain d'énergie et de temps pour réaliser l'étape E2 de séchage et décontamination des cristaux de PET du procédé selon la présente invention.

En aval de l'étape E1, le procédé de l'invention comprend une étape E2 de séchage et décontamination des cristaux de PET dans un réacteur sous vide à une température d'au moins 180°C pour donner des cristaux de PET décontaminés. Cette étape de séchage et décontamination dans un réacteur sous vide à une température d'au moins 180°C permet de décontaminer les cristaux de PET, par exemple en éliminant des agents pathogènes et/ou des contaminants. De plus, l'étape E2 de séchage et décontamination permet d'évaporer des contaminants difficiles à éliminer.

De préférence, à l'étape E2 de séchage et décontamination des cristaux de PET, le temps de résidence dans le réacteur sous vide est compris entre 45 minutes et 90 minutes, préférentiellement autour de 60 minutes, et la température est comprise entre 180°C et 220°C, ce qui permet d'assurer un séchage et une décontamination optimale des cristaux de PET tout en étant efficace énergétiquement et en maintenant une durée de séchage et décontamination permettant une production industrielle adéquate.

De préférence, les cristaux de PET décontaminés comprennent une teneur en eau inférieure à 100 ppm.

De préférence, la température dans le réacteur sous vide est atteinte par une énergie mécanique (friction des cristaux de PET les uns contre les autres), notamment à l'aide d'au moins un plateau tournant, de préférence au moins deux plateaux tournants. En effet, la friction des cristaux de PET les uns contre les autres grâce au plateau tournant permet un chauffage mécanique des cristaux.

Avantageusement, les cristaux de PET entrant dans le réacteur sous vide ont déjà passés la température de transition vitreuse au cours de l'étape E1 et possèdent des caractéristiques physico-chimiques relativement uniformes, notamment au niveau de la viscosité, de la température et de la teneur en eau, ce qui permet de bien contrôler la vitesse et l'amplitude de la montée en température, notamment par agitation mécanique (friction) des cristaux de PET dans le réacteur sous vide.

De préférence, le plateau tournant dans le réacteur sous vide a une vitesse de rotation comprise entre 100 et 200 tours/minute, de manière plus préférée entre 120 et 130 tours/minute. Alternativement, la montée en température des cristaux de PET dans le réacteur sous vide est atteinte par un autre moyen de friction, comme par exemple un plateau vibrant ou des pales de mélange, et/ou par un autre moyen de chauffage des cristaux de PET, comme par exemple un moyen de chauffage électrique ou un moyen de chauffage par rayonnement, etc.

En aval de l'étape E2, le procédé de l'invention comprend une étape E3 d'extrusion des cristaux de PET décontaminés dans une extrudeuse, pour former un extrudat. De préférence, l'extrudeuse est une extrudeuse monovis. Alternativement, l'extrudeuse utilisée dans le procédé selon la présente invention peut être une extrudeuse multivis comme par exemple une extrudeuse bi-vis. L'étape E3 d'extrusion des cristaux de PET décontaminés dans une extrudeuse permet de faire fondre les cristaux de PET en provenance du réacteur sous vide grâce à une montée en pression et en température du PET.

Avantageusement, les cristaux de PET décontaminés en sortie du réacteur sous vide sont directement envoyés vers une extrudeuse, pour conserver au maximum l'énergie thermique stockée dans les cristaux.
Avantageusement, la température dans l'extrudeuse est de l'ordre de 250°C et la pression est comprise entre 40 bars et 100 bars, préférentiellement autour de 70 bars.

En aval de l'étape E3, le procédé de l'invention comprend une étape E4 de passage de l'extrudat au travers d'une pompe à masse fondue et puis au travers d'une tête d'extrusion à filière plate. Le passage de l'extrudat au travers d'une pompe à masse fondue et puis au travers d'une tête d'extrusion à filière plate permet d'obtenir un débit d'extrudat contrôlable et régulier tout en assurant une pré-mise en forme de l'extrudat au travers de la tête d'extrusion à filière plate.

De préférence, à l'étape E4, l'extrudat présente un débit compris entre 400 kg/h et 800 kg/h, préférentiellement autour de 600 kg/h. De préférence, l'extrudat en amont de la pompe à masse fondue présente une pression amont comprise entre 20 bar et 60 bar, préférentiellement autour de 40 bar, et l'extrudat en aval de la pompe à masse fondue présente une pression avale comprise entre 100 bar et 200 bar, préférentiellement entre 140 bar et 160 bar.

Avantageusement, le procédé selon la présente invention comprend en outre une étape de filtration de l'extrudat en amont du passage de l'extrudat au travers d'une pompe à masse fondue. En effet, cette étape de filtration permet d'éliminer les contaminants qui n'auraient pas encore été éliminés.

En aval de l'étape E4, le procédé de l'invention comprend une étape E5 de calandrage, permettant d'obtenir un film de PET. De préférence, le film de PET en sortie de l'étape E5 de calandrage présente une épaisseur prédéterminée dont l'uniformité est contrôlée en aval du calandrage.

De préférence, le procédé selon la présente invention comprend un moyen de contrôle agencé pour mesurer et contrôler un ensemble de paramètres de production comme par exemple la température dans le sécheur, la pression et la température dans le réacteur sous vide et l'extrudeuse monovis, la vitesse d'avancée dans le tambour rotatif et l'intensité de rayonnement infrarouge dans le sécheur, la vitesse de rotation du/des plateau tournant dans le réacteur sous vide, la vitesse de rotation de la vis dans l'extrudeuse, le débit d'extrusion de l'extrudat, etc...

L'invention permet ainsi de fabriquer un film de PET particulièrement avantageux. En particulier, le film de PET obtenu/obtenu selon le procédé de l'invention comprend entre 30 et 50% en poids de PET provenant de déchets de production interne par thermoformage.

Le film de PET obtenu/obtenable selon le procédé de l'invention est avantageux pourfabriquer un emballage, en particulier par thermoformage dudit film. Ledit emballage est avantageusement un emballage alimentaire. Il peut être tout type d'emballage fabriqué usuellement en PET. Par exemple, un récipient, un bol ou un pot, une barquette, un couvercle, un plateau ou un gobelet.

Le film de PET obtenu/obtenable selon le procédé de l'invention est avantageusement utilisable dans un procédé de thermoformage.

Ls exemples suivants sont fournis à des fins d'illustration et ne sont pas destiné à limiter la portée de la présente invention.

### Exemples.-

### Exemple 1.- Film de polyéthylène téréphtalate, PET, comprenant 90% en poids de PET recyclé obtenu par le procédé de fabrication selon la présente invention

Des flocons de PET comprenant 90% en poids de PET recyclé (poids de PET recyclé/poids total des flocons de PET) dans lequel le PET recyclé comprend 30% en poids de PET issus de déchets de production interne par thermoformage (poids de PET issus de déchets de production interne par thermoformage/poids de PET recyclé) sont préséchés et cristallisés dans un sécheur à rayonnement infrarouge, à une température de 140°C pendant 15 minutes, pour donner des cristaux de PET. Le sécheur comprend un tambour rotatif dans lequel le PET avance entre l'entrée du sécheur et la sortie du sécheur.

Les cristaux de PET en sortie du sécheur sont directement envoyés pour une étape de séchage et décontamination dans un réacteur sous vide à 190°C. La montée en température des cristaux de PET dans le réacteur sous vide est réalisée par une agitation mécanique (friction des cristaux de PET les uns contre les autres) à l'aide de deux plateaux tournant ayant une vitesse de rotation comprise entre 120 et 130 tours/minute.

Après environ 60 minutes dans le réacteur sous vide, les cristaux de PET, ayant une teneur en eau inférieure à 50 ppm, sont directement envoyés dans une extrudeuse monovis agencée pour faire fondre les cristaux de PET à une température de l'ordre de 250°C et former un extrudat. En sortie d'extrudeuse, l'extrudat, ayant un débit de 600 kg/h, est filtré puis est envoyé au travers d'une pompe à masse fondue et puis au travers d'une tête d'extrusion à filière plate.

La pression en entrée et sortie de pompe est mesurée grâce à un capteur de pression. La pression en amont de la pompe est de l'ordre de 40 bar et celle en aval est d'environ 150 bar.

Finalement, la matière pré-mise en forme par son passage dans la filière plate a subi un processus de calandrage, par passage au travers de deux cylindres contrarotatifs refroidis écartés d'une certaine distance. Le film sortant des deux cylindres a ensuite été entraîné par plusieurs autres cylindres rotatifs, étiré et finalement enroulé en bobine.

Le film ainsi produit avait une épaisseur de 700 µm. Le film présente une très bonne qualité uniforme et présente une épaisseur sensiblement stable/constante.

Les différentes étapes du procédé selon la présente invention sont contrôlés à l'aide d'un moyen de contrôle permettant, entre autres, de mesurer en continu, et éventuellement adapter la température, l'intensité de rayonnement infrarouge ainsi que la vitesse d'avancée des flocons de PET dans le sécheur; la vitesse du plateau tournant, la température et la pression dans le réacteur sous vide ainsi que la vitesse de rotation de la vis dans l'extrudeuse.

### Exemple 2.- Film de polyéthylène téréphtalate, PET, comprenant 100% en poids de PET recyclé obtenu par le procédé de fabrication selon la présente invention

L'Exemple 1 a été reproduit excepté que les flocons de PET comprennent 100% en poids de PET recyclé (poids de PET recyclé /poids total des flocons de PET) dans lequel le PET recyclé comprend 40% en poids de PET issus de déchets de production interne par thermoformage (poids de PET issus de déchets de production interne par thermoformage/poids de PET recyclé).

### Exemple 3.- Film de polyéthylène téréphtalate, PET, comprenant moins de 10% en poids de PET recyclé obtenu par le procédé de fabrication selon la présente invention

L'Exemple 1 a été reproduit excepté que les flocons de PET comprennent moins de 10% en poids de PET recyclé (poids de PET recyclé : poids total des flocons de PET) dans lequel le PET recyclé comprend 10% en poids de PET issus de déchets de production interne par thermoformage (poids de PET issus de déchets de production interne par thermoformage /poids de PET recyclé).

Il est bien entendu que la présente invention n'est en aucune façon limitée aux formes de réalisations décrites ci-dessus et que bien des modifications peuvent y être apportées sans sortir du cadre des revendications annexées

## Revendications

1. Procédé de fabrication continu d'un film de polyéthylène téréphtalate (PET) comprenant, les étapes suivantes, d'amont en aval :
- une étape de pré-séchage et cristallisation de flocons de PET à une température d'au moins 80°C, lesdits flocons de PET comprenant au moins 30% de PET recyclé, dans un sécheur à rayonnement infrarouge pour donner des cristaux de PET avec une teneur en eau dans une gamme allant de 300 ppm à 3000 ppm,
- une étape de séchage et décontamination desdits cristaux de PET dans un réacteur sous vide à une température d'au moins 180°C pour donner des cristaux de PET décontaminés,
- une étape d'extrusion des cristaux de PET décontaminés dans une extrudeuse, pour former un extrudat,
- un passage de l'extrudat au travers d'une pompe à masse fondue et puis au travers d'une tête d'extrusion à filière plate, et
- une étape de calandrage, permettant d'obtenir un film de PET.

2. Procédé selon la revendication 1, dans lequel la température dans ledit réacteur sous vide est atteinte par friction des cristaux de PET, notamment à l'aide d'au moins un plateau tournant.

3. Procédé selon l'une quelconque des revendications précédentes, dans lequel ladite extrudeuse est une extrudeuse monovis.

4. Procédé selon l'une quelconque des revendications précédentes, dans lequel lesdits flocons de PET comprennent au moins 80%, 90%, voire 100% en poids de PET recyclé.

5. Procédé selon l'une quelconque des revendications précédentes, dans lequel lesdits cristaux de PET décontaminés comprennent une teneur en eau inférieure à 100 ppm.

6. Procédé selon l'une quelconque des revendications précédentes, dans lequel ledit PET recyclé comprend jusqu'à 40% en poids de déchets de production par thermoformage.

7. Procédé selon l'une quelconque des revendications précédentes, dans lequel, à l'étape de pré-séchage et cristallisation de flocons de PET, le temps de résidence dans ledit sécheur est compris entre 2 minutes et 30 minutes, et la température est supérieure à 80°C, préférentiellement comprise entre 100°C et 200°C, plus préférentiellement entre 150°C et 180°C.

8. Procédé selon l'une quelconque des revendications précédentes, dans lequel, à l'étape de séchage et décontamination desdits cristaux de PET, le temps de résidence dans le réacteur sous vide est compris entre 45 minutes et 90 minutes, préférentiellement autour de 60 minutes, et la température est comprise entre 180°C et 220°C.

9. Procédé selon l'une quelconque des revendications précédentes, comprenant en outre une étape de filtration de l'extrudat en amont dudit passage de l'extrudat au travers d'une pompe à masse fondue.

10. Procédé selon l'une quelconque des revendications précédentes, dans lequel, à l'étape de passage de l'extrudat au travers d'une pompe à masse fondue et puis au travers d'une tête d'extrusion à filière plate, l'extrudat présente un débit compris entre 400 kg/h et 800 kg/h, préférentiellement autour de 600 kg/h.

11. Procédé selon l'une quelconque des revendications précédentes, comprenant en outre un moyen de contrôle agencé pour mesurer et contrôler la température dans ledit sécheur, la pression et la température dans ledit réacteur sous vide et dans ladite extrudeuse monovis.

12. Procédé selon la revendication précédente, dans lequel ladite extrudeuse présente une vitesse de rotation adaptable pour maintenir une variation de pression amont par rapport à ladite pression amont et une variation de pression aval par rapport à ladite pression aval inférieure à 10%, préférentiellement inférieure à 5%.
